# EUROPEAN PATENT APPLICATION

(11) **EP 3 836 525 A1**
(43) Date of publication of application: **16.06.2021**
(21) Application number: 19383105.4
(22) Date of filing: 12.12.2019
(51) Int. Cl.: H04M 15/00, H04W 4/24, H04L 12/14, H04M 17/00

(54) **METHOD AND SYSTEM FOR BLOCKCHAIN BASED ROAMING**

(71) Applicant: Telefonica Digital España, S.L.U., 28013 Madrid (ES)
(72) Inventor: Lutu, Andra Elena, 28013 Madrid (ES); Perino, Diego, 28013 Madrid (ES)
(74) Representative: Carlos Hernando, Borja

(57) **Abstract**

A method and system for providing roaming connectivity services to user equipment are disclosed. The method comprises negotiating roaming interworking and agreements between at least two mobile network operators, a Home Mobile Network Operator and a Visited Mobile Network Operator, connected to a blockchain ledger of a private network; assigning, by the Home Operator, a given quantity of tokens to a given user equipment, said tokens being assigned as part of a first service contract signed between the Home Operator and the user equipment, wherein the user equipment comprises a smart personal card; providing, by the Visited Operator, roaming connectivity services to the user equipment, wherein the user equipment accesses each of the roaming connectivity services in exchange of tokens transferred to the Visited Operator through a payment channel; and exchanging, by the Visited Operator, the tokens it has received from the user equipment for money from the Home Operator.

## Description

### TECHNICAL FIELD

The present invention is directed to a method and system for providing roaming connectivity services to user equipment.

### BACKGROUND OF THE INVENTION

To enable roaming of users, the cellular ecosystem integrates many entities and procedures, including specific infrastructure to connect Mobile Network Operators (MNOs), business partnerships or the use of third-party Data Clearing Houses (DCHs) for billing. Many of these rely on specifications rooted in dated and arcane practices, involving long waiting periods for financial clearing, complex billing models and disparate mechanisms for dealing with inter-MNO disputes.

Roaming is one of the fundamental features of the cellular networks ecosystem. It enables clients of one MNO to use the network of another MNO when traveling outside their provider's area of coverage. To support roaming, the partnering MNOs must have a commercial agreement in place and a technical solution for exchanging signaling and data. Despite the fast evolution of cellular technology over the past decades, this logic has remained largely unchanged. Even more, the associated platforms and systems are opaque and little innovation has gone into this area. The advance of the inter-provider charging system is especially challenging as it requires standardization and subsequent joint evolution and deployment in the networks involved. This is inefficient, as the current inter-provider charging system for roaming services imposes penalties in terms of performance, operational costs and business revenues, which are described next in this document.

Most MNOs choose to use the services of a DCH for end-to-end roaming operations management, including data collection, clearing and cash settlement, although it is possible to do this on a peer-to-peer basis. Even with DCH, the charging settlement between MNOs is a slow and tedious procedure (i.e., monthly or yearly for roaming partners with little traffic) and disputes are most likely handled manually. Moreover, when analyzing the business interactions, MNOs have reported major revenue leakage, mainly because of incomplete customer records, accumulated roaming records, debt write-off and fraud.

The business logic around MNO interworking for roaming also has implications in the communication performance. The lack of trust between the Home Mobile Network Operator (HMNO) and the Visited Mobile Network Operator (VMNO), and the unwillingness of the former to expose to a foreign operator charging information for their native users makes home-routed roaming (HR) roaming the default roaming configuration MNOs deploy. With HR, the roaming traffic is routed through the home country, regardless the roaming user's actual geo-location. This implies that when the roaming user accesses services inside the visited country, all packets travel twice between the visited and the home country. This allows MNOs to control the charging function of their outbound roaming users, but is also translates into a non-negligible delay penalty and performance impairment. With existing regulation meant to tackle silent roamers and boost revenues (e.g., Roam like at Home in Europe users expect high quality, always-on services in a visited network; if these expectations are not met the risk of churn increases. There is thus an urgency for MNOs to develop sustainable and dynamic roaming strategies. Enabling local breakout (LBO) roaming, simplifying and speeding up the charging settlement would respond to this innovation need. However, LBO roaming requires MNOs to trust their roaming partners to correctly charge their customers, without being able to verify it.

### Background and Challenges of LTE Roaming

International roaming services expand operators' scope and help enhance their competitiveness, by improving subscriber satisfaction and loyalty, and attracting new subscribers. In addition, operators can increase revenue by providing services to subscribers served by other international operators. Therefore, it is important for operators to better implement worldwide seamless LTE roaming to provide subscribers with various services, including voice, data, and multimedia. However, due to different standards, systems, and inventory markets, implementing international roaming for LTE and future networks comes with a number of challenges.

First, roaming margins are decreasing due to regulation (e.g., "Roam like at Home") and stronger competition, while at the same time the number of partners, special discount deals and tariff plans are increasing dramatically. This, coupled with the introduction of new technologies like VoLTE, is driving operators to investigate ways to simplify roaming clearing methodologies. Current clearing solutions providers need to ensure that their managed service offering adapts to these changes. However, this effort also translates into an increase in the price MNOs pay to the third parties.

Second, with the current solution of home-routed roaming being very popular in 2G/3G, we find that it is also the first choice for LTE roaming solutions. However, this comes with a performance penalty (because all user traffic is looped back to the home network), which can impact the experience of the end user. With MNOs unable to compete on price, the subscribers' quality of experience will potentially become a key factor in choosing a provider. The subscribers will increasingly start to compare the roaming experience to the home experience. Local Breakout roaming can relatively reduce user plane loops and transmission resources required, thereby reducing the roaming service delay and providing better user experience. However, service control, policy control, and charging are complex.

### Roaming Networking Mode

To ensure service continuity while roaming, operators must establish connections and sign roaming agreements. Roaming agreements allow operators to set policies to control network access for roaming subscribers and manage roaming services. Operators can connect directly or through an IPX network.

### Direct interconnection

Operators can implement the direct interconnection solution using private lines, or establish VPNs on private networks. Although this network easily solves the QoS and security issues, it greatly increases costs, especially for direct connections with many international point-to-point private lines. In addition, new private lines must be established when an operator is added. This is time consuming and costly. This connection is usually used between friendly operators or between multiple subnets in an operator.

### IPX hub interconnection

To support LTE data roaming, MNOs migrate towards connecting with each other through an IP Packet Exchange (IPX) network. An IPX can be described as a hub that interconnects MNOs over a private IP backbone network and is possibly run by a third party IPX provider. An IPX provider has connections to multiple network operators and thus enables each MNO to connect to other operators via a single point of contact. IPX has evolved from the GRX framework and provides a more open and flexible environment to interconnect fixed-lines and mobile service providers.

An IPX hub solution has multiple benefits, such as security, flexible interconnections with end-to-end guaranteed service level agreements, completely transparent environment to end users. However, IPX providers are third parties that the MNOs hire and to which they externalize the task of establishing roaming agreements. Though more flexible than the direct interconnection model, the IPX hubs are however not under the control of the MNOs and still require the MNO to contract Clearing and Settlement Service.

### Roaming Type

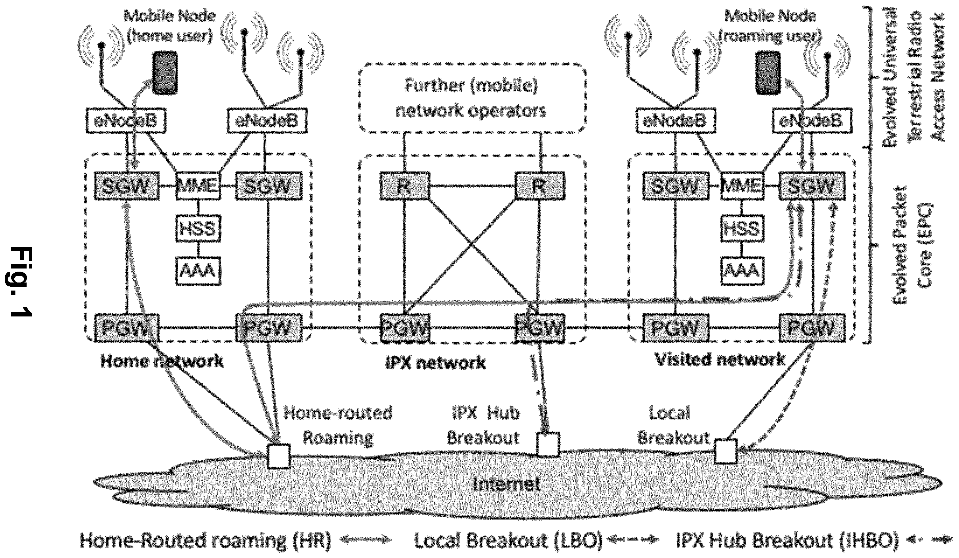

In Fig. 1, it is presented the set of topology architectures that can be used for roaming in a mobile network, namely, home-routed roaming (HR), local breakout (LBO) and IPX hub breakout (IHBO). Two roaming types are currently supported in the LTE architecture: Home-routed (HR) and Local Breakout (LBO). Recently, a third one was proposed, namely IPX hub breakout.
- Home-routed roaming enables subscribers to access the visited network through the home PDN gateway (PGW) and obtain services provided by their home networks.
- LBO roaming enables subscribers to access the visited network through the visited PGW and obtain services, which can be provided by the home or visited network. The visited policy and charging rules function must obtain policies of the home network from the home PCRF (H-PCRF) over the S9 interface.
- IPX hub breakout enables MNOs that connect through an IPX provider and use a PGW hosted by the hub operator.

When a mobile node is at home (left, see Figure 1), the home user's traffic will take a short path inside the network to reach a suitable Packet Data Network Gateway (PGW) to the Internet. The traffic of a roaming user (right, see Figure 1) is directed to an egress PGW whose location depends on the roaming architecture. In the case of HR, the mobile node receives the IP address from its home MNO and the roaming user's traffic is first routed towards a PGW in the home network (red path). With LBO, the mobile node receives its IP address from the visited network and the traffic is routed towards a local PGW in the visited network (purple path). When using IHBO, the mobile node obtains its IP address from the IPX networks and the traffic is routed through a PGW in the IPX network (green path). These approaches have a potential impact on the communication performance. For instance, when the node accesses services inside the visited network, the performance is likely to be worse in the HR case, because all packets travel twice between the visited and the home country; less so when the communication peer is in a third country and minimally when accessing services in the home country.

### Implications of Roaming Type

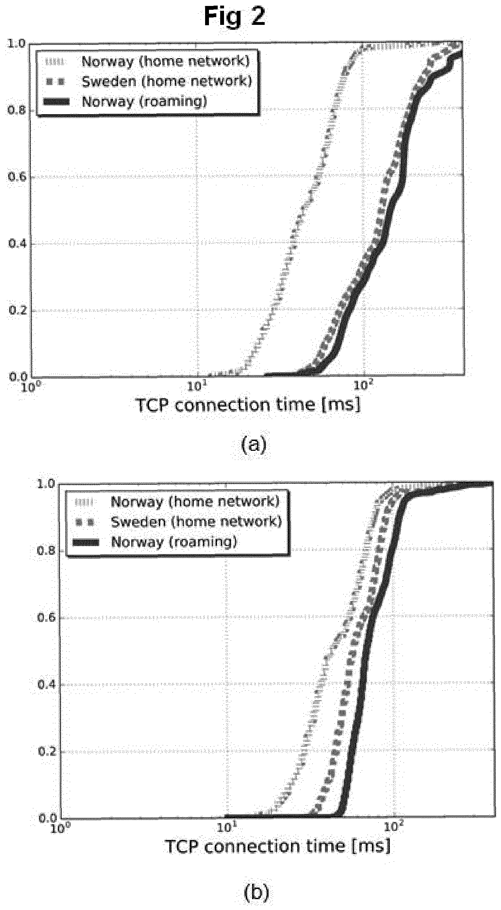

Based on initial measurements run on 16 MNOs in Europe, it was found that the roaming user exit point to the Internet is always in the home network (Figure 1). Thus, the data that the roaming user consumes always flow through the home network. Depending on the location of the other communication endpoint, this translates into a potential delay penalty. For example, Fig. 2 presents the CDF of TCP connection time of all the successful connections over ports 80 and 443 in logarithmic scale for Telia SIM cards against servers that Akamai and Google host, respectively. The performance for the three Telia SIM cards in the MONROE nodes: two locally connected in Norway (Telia NO -- home network) and Sweden (Telia SE -- home network), and a third Telia Sweden SIM card roaming on a Norwegian MONROE node were compared. According to these results, TCP connection time takes on average 20ms more on roaming devices than on those connecting directly to the local network because of the home-router roaming configuration. The HR approach, by its nature, defeats the purpose of CDNs placing content close to the user. Roaming users do not benefit from existing peering agreements between the host network and large cloud service providers.

In order to mitigate these issues, the LBO roaming configuration (see Figure 1) was proposed. In this case, the end-user roaming in a visited country would connect to a local MNO as a native user of the latter. However, this approach comes with challenges in terms of inter-MNO coordination of user data, which blockchain technology can help mitigate.

These results were put in perspective while trying to also speculate on the commercial implications of regulatory initiatives such as the 'Roam like Home'. As regulation reduces the ability of MNOs to compete on price, the subscribers' quality of experience will potentially become a key factor in choosing a provider. The subscribers will increasingly start to compare the roaming experience to the home experience. Thus, an expectation of high quality, always-on services in a visited network follows and if a home network fails to deliver in the visited network, the risk of churn increases. To this end, LBO is a natural step for an IP-based service, and could offer lower operational cost, and cheaper tariffs for data, while at the same time we have shown this can eliminate delay and potentially increase capacity for some traffic (dependent on the destination). Although LBO relies on access to the infrastructure of the visited network which can have implications on service control and charging, offering this could act in the advantage of the first operators to provide the service.

Apart from that, in general terms, a blockchain is a distributed database that stores a linear sequence of blocks. Each block contains one or more related transactions and the blocks are ordered in time. A blockchain related solution to present invention is BubbleTone. Another related solution, but for peering agreements between Internet Service Providers is Dynam-IX.

### DESCRIPTION OF THE INVENTION

Present invention proposes a dynamic interconnection for the cellular ecosystem, also known as DICE, that facilitates dynamic collaboration between MNOs and sustain fluid interconnection models between the end-users and MNOs. The invention uses distributed ledger technology (DLT) to enable MNOs to interact directly and offer customizable services to their users through the use of crypto-currencies.

According to a first aspect present invention proposes a method for providing roaming connectivity services to user equipment. The method comprises negotiating roaming interworking and agreements between at least two mobile network operators (MNOs), a Home Mobile Network Operator and a Visited Mobile Network Operator, connected to a blockchain ledger of a private network; assigning, by the Home Mobile Network Operator, a given quantity of tokens for accessing roaming services to a given user equipment, said tokens being assigned as part of a first service contract signed between the Home Mobile Network Operator and the user equipment, wherein the user equipment comprises a smart personal card; providing, by the Visited Mobile Network Operator, roaming connectivity services to the user equipment, wherein the user equipment accesses each of the roaming connectivity services in exchange of tokens transferred to the Visited Mobile Network Operator through a payment channel; and exchanging, by the Visited Mobile Network Operator, the tokens it has received from the user equipment for money from the Home Mobile Network Operator.

According to another embodiment, the smart personal card is a SIM card. In this case the SIM card is first set to a home profile. The SIM card can be then changed to a remote profile by the user equipment. In this last configuration, the roaming connectivity services are provided as part of a second service contract signed between the Visited Mobile Network Operator and the user equipment. Once the payment channel is closed the Home Mobile Network Operator sets the SIM card back to said home profile.

The smart personal card may be an iSIM card, for example.

In some or all of said embodiments, the payment channel is closed after expiration of a time-out counter, the latter being set by the Visited Mobile Network Operator. For example, the time-out counter may be 24 hours.

The payment channel may be closed after the user equipment has set the SIM card to a new remote profile.

In some or all of the above embodiments, the tokens comprise a cryptographic currency valid only for the private network.

In some or all of the above embodiments, the payment channel is a unidirectional roaming payment channel with a determined traffic granularity, for example 100KB. In addition, the tokens can be transferred to the Visited Mobile Network Operator through hashed time-locks contracts.

According to the invention, particularly, the first and second service contracts are added/written to the blockchain ledger by means of an immutable and tamper-free record. Each roaming connectivity service the user equipment accesses is also added/written by means of an immutable and tamper-free record. Each record includes a timestamp.

In another aspect present invention also provides a system for providing roaming connectivity services to user equipment. The system comprises a user equipment, such as a smartphone, comprising a smart personal card; a computer of a Home Mobile Network Operator and a computer of a Visited Mobile Network Operator.

The computers of the Home Mobile Network Operator and the Visited Mobile Network Operator form part of a blockchain ledger of a private network and are configured to negotiate roaming interworking and agreements between them. The user equipment because of the negotiated roaming interworking and agreement is configured to receive, from the computer of the Home Mobile Network Operator, a given quantity of tokens for accessing roaming services, the tokens being received after a first service contract is signed between the computer of the Home Mobile Network Operator and the user equipment; and get roaming connectivity services from the computer of the Visited Mobile Network Operator, wherein the user equipment accesses each of the roaming connectivity services in exchange of tokens transferred to the computer of the Visited Mobile Network Operator through a payment channel. The computer of the Visited Mobile Network Operator is further configured to exchange the tokens it has received from the user equipment for money from the computer of the Home Mobile Network Operator.

Hence, present invention provides an interconnection framework for MNOs that want to engage in roaming partnerships. The invention acts as a mechanism for collectively recording and notarizing any type of data exchanged between users and visited networks and between roaming partners, thus avoiding intermediaries such as clearing houses or roaming hubs. The invention leverages novel technologies such as DLT also known as blockchain, to enable MNOs to interact directly and offer customizable services to their users (e.g., through the use of crypto-currencies). The invention will enable a consortium of mobile network operators to engage in dynamic and versatile business relationships, without the need of third-party facilitators. The components of the framework include a protocol to automate the interaction of mobile operators (also with their subscribers), a template to specify contracts easily and the legal framework to handle them and a blockchain solution to store every transaction between the mobile operators in the consortium and enable the exchange of value between entities without trust.

### Brief Description of the Drawings

The previous and other advantages and features will be more fully understood from the following detailed description of embodiments, with reference to the attached figures, which must be considered in an illustrative and non-limiting manner, in which:
Figure 1 illustrates Internet access options for a mobile node at home (left) and when roaming (right).
Figure 2 illustrates the effect of HR on TCP handshake over Telia SE (roaming on Telia Norway) against servers belonging to a) Amazon and b) Google.
Figure 3 graphically illustrates a method for providing roaming connectivity services to user equipment according to an embodiment of the present invention.

### DETAILED DESCRIPTION OF PREFERRED EMBODIMENTS

Present invention provides a novel interconnection framework for mobile network operators (MNOs) that want to engage in international roaming partnerships. Present invention leverages novel technologies such as distributed ledger technology (DLT), also known as blockchain, to enable MNOs to interact directly and offer customizable services to their users (e.g., through the use of crypto-currencies).

In general terms, a blockchain is a distributed database that stores a linear sequence of blocks. Each block contains one or more related transactions and the blocks are ordered in time. Once a block becomes a part of the roaming blockchain, it is read-only and it is advertised to all the members of the blockchain (who synchronize their copy of the distributed database). The blocks are cryptographically linked using a hash (tamper-proof digital fingerprint), can be checked at any moment and cannot be modified. Present invention proposes the implementation of a *consortium blockchain,* which has many of the same advantages of a private blockchain, but operates under the leadership of a group instead of a single entity. As opposed to the public blockchain model which allows any person with an internet connection to participate in the verification of transactions process, a few selected nodes are predetermined. A transaction can vary from, for example, visited networks offering service to a roaming user to, for example, MNO participants registering roaming agreements.

The blockchain created the opportunity of using technology to lower uncertainty about the identity of the different entities involved in the roaming transaction (i.e., the roaming user, the home network and the visited network offering roaming services to the roaming user). The purpose of the roaming blockchain is to allow MNOs to engage in a roaming partnership and to exchange value easily, without the need of a third party to act as a trusted intermediary with the role to verify the interaction between the roaming partners. The notion of uncertainty to which present invention refers integrates three main components: identity (not knowing with whom we are dealing), visibility of transactions between any entities and recourse in case something goes wrong. The blockchain technology can address all of these and enable the exchange of value without trust between the entities. Smart contracts (or blockchain contracts) are computer programs that act as agreements and which can self-execute on the blockchain. Present invention leverages the blockchain contracts to enable the MNO partners to offer service to roaming users and coordinate this exchange. Binding contracts guarantee that the contracts execute without a third party.

With the present invention, Internet or Telephone Service Providers can jumpstart a roaming consortium that can, at first, integrate all the MNOs operating under the corporation umbrella. The MNOs can then interact without the need of a third party to control, verify and enforce roaming contracts. This would mean that the blockchain would enable MNOs to bypass the use data clearing houses for data and financial clearing. Instead, the exchange of value between roaming partners can occur in the blockchain based on validated transactions between roaming users and visited networks. No individual organization in the group can be trusted with maintaining this archive of records, because falsified or deleted information would significantly damage the others. Nonetheless it is vital that all agree on the archive's contents, in order to prevent disputes.

The blockchain used by present invention is a shared database into which all of the roaming records for the consortium are written, with each record accompanied by a timestamp and proof of origin. This solution thus gives the organizations a way to jointly manage this archive, while preventing individual participants (or small groups thereof) from corrupting it. The transparency in terms of the roaming transactions (data exchange between the user and the network) is also guaranteed.

Regardless the technical solution MNOs use for implementing roaming, the present invention is proposed to settle roaming contracts and perform all the functions of a clearing house. The idea is to provide a system for direct transfer of assets that settles in almost real-time, and is a cheaper, more transparent and secure alternative to transfer systems used by MNOs today.

Present invention can serve two goals: 1) eliminating the need for an intermediary, such as a clearing house or an IPX hub for data and financial clearing and 2) enabling the implementation of LBO roaming by enabling the roaming user to attach to a visited network as a native user.

Present invention aims to facilitate dynamic collaboration between MNOs by: (i) eliminating the need for an intermediary, such as a DCH for clearing and settlement services and (ii) supporting the implementation of LBO roaming by enabling the roaming user to attach to a visited network as a native user. To achieve these goals present invention ensures the following:
- *Near real time billing:* present invention should enable the roaming partners to bill a user and settle the charges among them in almost real time. This would guarantee the user is able to consume the traffic she is allowed, avoiding incomplete and accumulated roaming records.
- *Automated dispute resolution:* present invention should avoid the generation of disputes among MNOs, and automatically solve any billing issue arising.
- *Trust:* present invention should provide mechanisms to build trust among MNOs to guarantee optimal performance for the customer (e.g., enable LBO roaming).
- *Confidentiality:* present invention must guarantee that any information considered private by the MNOs (e.g., billing information across roaming partners, or personal customer information) does not leak to unauthorized parties.

The components of the present invention framework include: i) a protocol to automate the interaction of mobile operators (also with their subscribers); ii) a template to specify contracts easily and the legal framework to handle them; iii) a blockchain solution to store every transaction between the involved entities and enable the exchange of value.

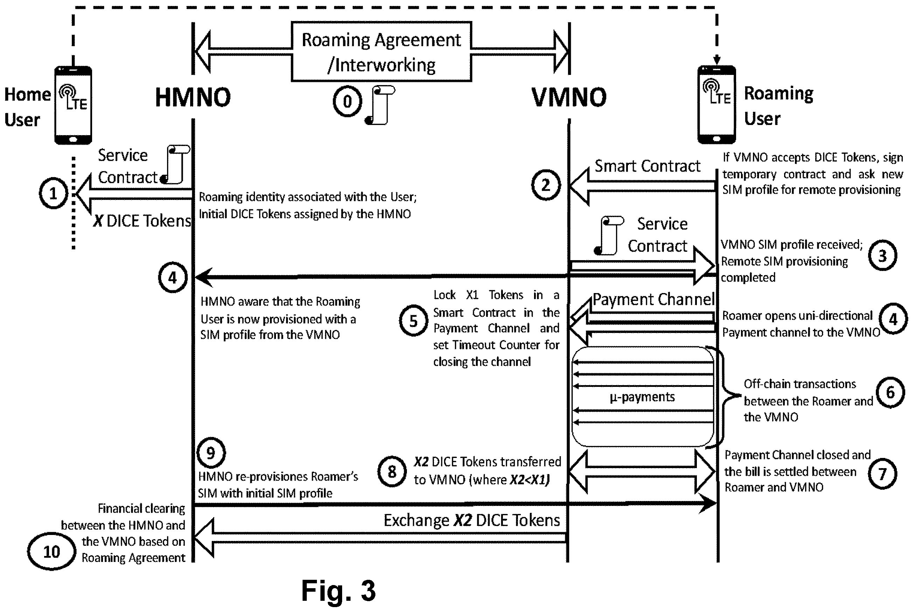

With regard to Figure 3, it is shown an embodiment of a method for providing roaming connectivity services to user equipment according to the invention. In this embodiment present invention demonstrates how Alice (a user provided by a user equipment such as a smartphone or mobile phone) can use the proposed solution to roam internationally, and how the proposed mechanisms provide near real time billing and avoid disputes across MNOs.

As showed in Figure 3, a number of MNOs agree to form a consortium. Every MNO establishes roaming interworking and agreements with some of the other MNOs in the consortium (Step 0). Each of the MNOs in the consortium owns crypto-currencies (different tokens for each MNO) that they can assign to their customers for buying roaming services. When purchasing connectivity from the HMNO (as part of the initial or first service contract), Alice will use the tokens from the HMNO to buy service when roaming internationally. An initial assignment from the HMNO to Alice's of X tokens than Alice can spend while roaming is generated (Step 1). This will be a transaction appended to the blockchain ledger, which hereinafter remains immutable and tamper-free.

When traveling to a visited country, Alice attempts to obtain connectivity service from a local MNO that has a previous roaming agreement with her HMNO. Through the use of a smart contract that executes on the blockchain the following two conditions are verified: (i) Alice verifies whether the selected VMNO accepts the HMNO DICE tokens (Step 2); (ii) the VMNO authenticates Alice as a valid user of the HMNO by verifying that her e-wallet contains tokens from the HMNO and by checking the on-chain associated transaction to the initial assignment from the HMNO. If these conditions are met, Alice signs a service contract (second service contract in the claims) with the VMNO and requests a new profile to remotely provision her Subscriber Identity Module (SIM) card (Step 3 in Figure 3). Remote SIM provisioning allows Alice to remotely change the SIM profile on a deployed SIM without physically changing the SIM itself (Step 4 in Figure 3). Once the new SIM profile is configured, Alice opens a unidirectional roaming payment channel towards the VMNO (Step 5 in Figure 3). In order to ensure that Alice pays her bill for the roaming service, tokens have to be locked up as security in a smart contract for the lifetime of the payment channel (Step 6 in Figure 3). Payment channels allow for practically unlimited transfers between the two participants, as long as the net sum of their transfers does not exceed the deposited tokens. These transfers can be performed instantaneously and without any involvement of the actual proposed blockchain itself, except for an initial one-time on-chain creation and an eventual closing of the channel. Alice uses the payment channel to issue micro-payments to the VMNO periodically for the service the latter offers (Step 7 in Figure 3). In an embodiment, the MVNO associates a time-out counter after each last micro-payment issued by Alice in order to make sure that the payment channel closes when it has been inactive for a given amount of time (e.g., 24 hours, among others). The channel can also be closed from Alice when she configures another SIM profile of an MVNO or the one of its HMNO. Once the payment channel is closed and the on-chain transaction completes (Step 8 in Figure 3), the VMNO receives the tokens from Alice (Step 9 in Figure 3). In the same time, the HMNO re-provisions the Alice's SIM with the initial profile (Step 10 in Figure 3). Finally, the VMNO can proceed to exchange the tokens it has received from Alice for money from the HMNO (Step 11 in Figure 3).

Present invention provides near real time billing as the tokens are locked as Alice (the roamer) starts consuming data, and transferred as the channel is closed. It also guarantees that there will not be dispute or monetary losses, as Alice can use the service only in exchange of tokens transferred to the visited network. The procedures associated with the present invention are automated and do not require any human intervention, besides the initial opt-in for the proposed schema and agreement stipulation across MNOs.

In an embodiment, the protocol in Figure 3 includes the use of remote SIM provisioning through iSIM to enable LBO roaming. Though this is the desirable configuration, present invention offers an alternative solution to ensure compatibility with the current HR roaming status. In this latter case, the proposed method skips Step 3 in Figure 3 and simply relies on the existing roaming configuration implemented by the HMNO. Assuming HR roaming, the HMNO is still the entity that controls the roamer's exit point to the Internet and there is no need for a legal contract (i.e. the second contract) with the VMNO in the visited country. Thus, the ledger accounts in near-real time the activity of the roamer in the VMNO by translating the received service (i.e., transferred traffic) into tokens the roamers pay to the VMNO. This process is compatible with the logic of steps 4-8 in Figure 3.

The consortium blockchain solution allows the creation of cryptocurrencies with meaning only within the private network (i.e., different from public crypto-currencies such as Bitcoin). It also keeps the control of the blockchain among its members and avoids external entities to influence or attack the system. Also, consortium blockchain allow for competing business entities to interact on the same blockchain.

Given the requirements in terms of the number of blockchain transactions per second (TPS), present invention is particularly built using Hyperledger Fabric - a permissioned blockchain - as the distributed tamper-proof ledger. Hyperledger can accommodate 20,000TPS, while other blockchains such as Ethereum can accommodate only 10-25 TPS or Ripple 1,500 TPS. This is enough to process the number of funding transactions required for the creation of the channels for the visiting nodes. Besides dimensional requirements, Hyperledger is also a suitable technology for the following reasons: i) it offers a modular framework that allows for assets to be transferred between blockchain participants (in present invention's case, tokens that account for mobile connectivity service); ii) it allows the members of the permissioned network to define the asset type, its value and the consensus protocol; iii) Hyperledger provides membership identity service that manages participants' identities and authenticates them. It can also enable the use of additional access control lists to provide additional layers of permission; iv) the ledger consists of a database storing the current state of the network and a log of transactions for tracking each asset's provenience.

Likewise, particularly, the payment channels are unidirectional payment channels that allow the transfer of coins from the roamer to the VMNO based on the traffic exchanged by the visiting node. In a particular embodiment present invention proposes a granularity of 100KB, meaning that the roaming user will transfer coins for every 100KB of traffic transferred through the VMNO. This is the typical billing granularity currently used for roaming. It should be noted however that other granularities could be equally used. Additionally, to enable scalability of this charging model while meeting the invention requirements, present invention relies on payment channels based simple on hashed time-locks contracts that enable off-chain transactions between the roaming user and the VMNO. It follows that each visiting node will require the creation of one on-chain funding transaction for creating the channel and all the transactions paying for the traffic exchanged will happen off-line.

The usage of a distributed ledger implies that every party involved in the network would have access to all transactions, even the ones where they were not involved in the transactions themselves. This brings a challenge for telco businesses that are competing in the same space and do not want to reveal company secrets to their competitors. This also impacts privacy of end users that could be tracked across MNOs. Hyperledger Fabric solves the former problem by offering private channels, which are restricted messaging paths that offer privacy for specific subsets. In this case, all data is invisible to members not granted specific access. To further obfuscate the number of customers an MNO has active and preserve user privacy, present invention envision that the HMNO can assign to the roamer multiple identities (or e-wallets), to which the latter attaches different amounts of DICE tokens.

In the last step of the protocol depicted in Figure 3, the VMNO triggers the financial clearing procedure by exchanging the tokens from its inbound roamers with the corresponding HMNOs. To avoid potential speculations on exchanging these tokens to money, present invention can implement a prior check for the provenience of the tokens being exchanged. Specifically, for an HMNO to accept the tokens from a partner VMNO, the latter must prove that it received the tokens from a customer of the HMNO in exchange for its service. In other words, the HMNO will convert to fiat money the coins that went from its own customers to the VMNO. This final financial settlement step also implies the use of a specific billing model, one that the roaming partners likely agree upon in the Roaming Agreement they sign (Step 0 in Figure 3) This can accommodate different charging models. In the past decades, the wholesale roaming charge models for data usage have remained in the retail-like charge models, which are applied to each visitor who roamed in the VMNO (per session per IMSI). With increasing roaming data usage there is the trend to use a simplified IOT (Inter Operator Tariff) model such as the "Fixed" or "Per-Unit" charge model which is applied to the total volume of data usage with or without a post-discount adjustment. Present invention offers maximum flexibility of implementing dynamics charging models at different granularity levels.

The scope of the present invention is defined in the following set of claims.

## Claims

1. A method for providing roaming connectivity services to user equipment, the method comprising:
- negotiating roaming interworking and agreements between at least two mobile network operators, a Home Mobile Network Operator and a Visited Mobile Network Operator, connected to a blockchain ledger of a private network;
- assigning, by the Home Mobile Network Operator, a given quantity of tokens for accessing roaming services to a given user equipment, said tokens being assigned as part of a first service contract signed between the Home Mobile Network Operator and the user equipment, wherein the user equipment comprises a smart personal card;
- providing, by the Visited Mobile Network Operator, roaming connectivity services to the user equipment, wherein the user equipment accesses each of the roaming connectivity services in exchange of tokens transferred to the Visited Mobile Network Operator through a payment channel; and
- exchanging, by the Visited Mobile Network Operator, the tokens it has received from the user equipment for money from the Home Mobile Network Operator.

2. The method of claim 1, wherein:
the smart personal card is a SIM card set to a home profile;
the roaming connectivity services are provided as part of a second service contract signed between the Visited Mobile Network Operator and the user equipment and after the user equipment has configured the SIM card to a remote profile; and
the Home Mobile Network Operator sets the SIM card back to said home profile once the payment channel is closed.

3. The method of any of previous claims, wherein the payment channel is closed after expiration of a time-out counter, the latter being set by the Visited Mobile Network Operator.

4. The method of claim 3, wherein the time-out counter is set to 24 hours.

5. The method of claim 2, wherein the payment channel is closed after the user equipment has set the SIM card to a new remote profile.

6. The method of any of previous claims, wherein the tokens comprises a cryptographic currency valid only for said private network.

7. The method of any of previous claims, wherein the payment channel is a unidirectional roaming payment channel with a determined traffic granularity.

8. The method of any of previous claims, wherein the tokens are transferred to the Visited Mobile Network Operator through hashed time-locks contracts.

9. The method of claim 1 or 2, wherein the first and second service contracts as well as each roaming connectivity service the user equipment accesses are added to the blockchain ledger by means of an immutable and tamper-free record, each record including a timestamp.

10. A system for providing roaming connectivity services to user equipment, comprising:
- a user equipment comprising a smart personal card;
- a computer of a Home Mobile Network Operator;
- a computer of a Visited Mobile Network Operator;
wherein the computers of the Home Mobile Network Operator and the Visited Mobile Network Operator form part of a blockchain ledger of a private network and are configured to negotiate roaming interworking and agreements between them;
wherein as part of the negotiated roaming interworking and agreement, the user equipment is configured to:
- receive, from the computer of the Home Mobile Network Operator, a given quantity of tokens for accessing roaming services, the tokens being received after a first service contract is signed between the computer of the Home Mobile Network Operator and the user equipment;
- get roaming connectivity services from the computer of the Visited Mobile Network Operator, wherein the user equipment accesses each of the roaming connectivity services in exchange of tokens transferred to the computer of the Visited Mobile Network Operator through a payment channel; and
wherein the computer of the Visited Mobile Network Operator is further configured to exchange the tokens it has received from the user equipment for money from the computer of the Home Mobile Network Operator.

11. The system of claim 10, wherein the smart personal card is a SIM card which is first set to a home profile and changed to a remote profile before the user equipment gets the roaming connectivity services from the Visited Mobile Network Operator.

12. The system of claim 11, wherein the smart personal card is an iSIM card.

13. The system of claim 10, wherein the tokens comprises a cryptographic currency valid only for said private network.

14. The system of claim 10, wherein the payment channel is a unidirectional roaming payment channel with a determined traffic granularity.

15. The system of claim 10, wherein the computer of the Visited Mobile Network Operator is configured to transfer the tokens through hashed time-locks contracts.
